Europäisches Patentamt

(19) European Patent Office

Office européen des brevets

(11) Publication number: **0 229 742 B1**

# (12) EUROPEAN PATENT SPECIFICATION

(45) Date of publication of patent specification :
09.10.91 Bulletin 91/41

(51) Int. Cl.⁵ : **F16K 31/08, F24F 11/053,**
**G05D 23/185**

(21) Application number : 87630002.1

(22) Date of filing : 02.01.87

(54) Warm-up/changeover valve or proximity switch.

Divisional application 90202694.7 filed on
02/01/87.

(30) Priority : 06.01.86 US 816187

(43) Date of publication of application :
22.07.87 Bulletin 87/30

(45) Publication of the grant of the patent :
09.10.91 Bulletin 91/41

(84) Designated Contracting States :
CH FR GB LI SE

(56) References cited :
EP-A- 0 043 002
DE-C- 1 229 927
FR-A- 2 550 602
GB-A- 813 260
US-A- 2 575 086

(56) References cited :
US-A- 3 117 723
US-A- 3 450 342
US-A- 3 824 800
PATENT ABSTRACTS OF JAPAN, vol. 8, no.
230 (M-333)(1667), October 23, 1984 & JP-A-59
110 981 (SANYO DENKI K.K.) 27-06-1984

(73) Proprietor : CARRIER CORPORATION
Carrier Tower 6304 Carrier Parkway P.O. Box
4800
Syracuse New York 13221 (US)

(72) Inventor : Dreibelbis, Richard C.
55 Sanford Road
Fair Lawn New Jersey 07410 (US)
Inventor : Coleman, Milton H.
122 West Dauenhauer Street
East Syracuse New York 13057 (US)

(74) Representative : Weydert, Robert et al
OFFICE DENNEMEYER S.à.r.l. P.O. Box 1502
L-1015 Luxembourg (LU)

EP 0 229 742 B1

Jouve, 18, rue Saint-Denis, 75001 PARIS

## Description

The invention relates to a valve, especially for use in a conditioned air distribution system to achieve a warm-up or changeover function, said valve comprising housing means defining a chamber and having a plurality of fluid port means in fluid communication with said chamber, valve element means including magnetic means and being pivotably mounted in said chamber so as to be movable between a first position blocking one of said port means and a second position blocking another of said port means; and actuator means including a magnetic member and means for moving said magnetic member relative to said magnetic means whereby said valve element means is caused to move between said first and second positions due to magnetic force between said magnetic means and said magnetic member.

A magnetically operated valve of the above type is disclosed in GB-A-813 260. The known valve serves to control the liquid level in a container and operates in response to repulsion between two magnets to control the supply of high pressure fluid to or the venting of fluid from a control chamber of a feed-water valve. The valve closure members are mounted in a rocking yoke to control a high pressure fluid supply line and a vent line.

In EP-A-043 002 there is disclosed a central air conditioning system in which airflow into a zone is controlled by bellows inflation which is in turn controlled by a thermostatic bleed valve. Where conditioned air is supplied at a single temperature, it is often necessary and/or desirable to change over from heating to cooling and vice versa. Such changeovers can be long-term, as in the case of seasonal changes or short-term, as in the case of warming up an overcooled building prior to the arrival of the work force. For example, after a weekend or holiday during which the minimum cooling condition overcooled the building in the absence of the cooling load supplied by the personnel, lights and equipment, it is desirable to warm the building long enough to reduce the overcooling to an acceptable level. The thermostatic response is, however, correct without change for only one mode of operation. If, for example, the thermostatic response is correct for cooling, the supplying of heated air will encounter a minimum or no flow condition in an undercooled zone or area and dissatisfaction causing overheating if the zone temperature is above the cooling set point. Obviously, neither condition is satisfactory or energy efficient.

The object of the invention is to provide a valve or proximity switch especially suitable for achieving a warm-up or changeover function in a conditioned air distribution system of the recited type.

According to the invention, to achieve this, the valve is characterized by said plurality of fluid port means comprising an inlet port and a first and a second outlet port, said valve element means including a flexible blade and said outlet ports being located on opposite sides of said blade, said blade having one end portion fixed to said housing means and another end portion carrying said magnetic means and a single port closure disc adapted to block said first outlet port in said first position of said valve element means and said second outlet port in said second position of said valve element means, biasing means for normally positioning said valve element means in said first position, and said actuator means being adapted to move the magnetic member into and out of proximity with said magnetic means whereby said valve element means is caused to move to said second position due to magnetic attraction between said magnetic means and said magnetic member when in proximity and returns to said first position when out of proximity.

The warm-up/changeover valve or proximity switch can be either thermostatically responsive or solenoid actuated. If the use is to be for warm-up, a bleed line for deflating the bellows is opened when the valve is opened in response to the supplying of warm air or to the ceasing of the supplying of electrical power to the solenoid as due to the opening of a thermostatic switch. If a changeover function is required, the valve is configured as a valve with one outlet supplying air to the heating thermostat and one outlet supplying air to the cooling thermostat.

For a fuller understanding of the present invention, reference should now be made to the following detailed description thereof taken in conjunction with the accompanying drawings wherein:

Figure 1 is a schematic representation of a central air conditioning system employing the valve of the present invention for a warm-up function;

Figure 2 is a schematic representation of a central air conditioning system employing the valve of the present invention for a heating/cooling changeover;

Figure 3 is a pictorial view of a first embodiment of the valve of the present invention;

Figure 4 is a sectional view taken along line 4-4 of Figure 3 showing the valve element in a first, actuated position;

Figure 5 is a sectional view of a second embodiment of the valve of the present invention corresponding to Figure 4 and showing the valve element in a second, unactuated position;

Figure 6 is a sectional view of a third embodiment of the valve of the present invention showing the valve element in the second position but which is the solenoid actuated position;

Figure 7 is a pictorial view of the valve element;

Figure 8 is a top view of the valve element; and

Figure 9 is a sectional view taken along line 9-9 of Figure 8.

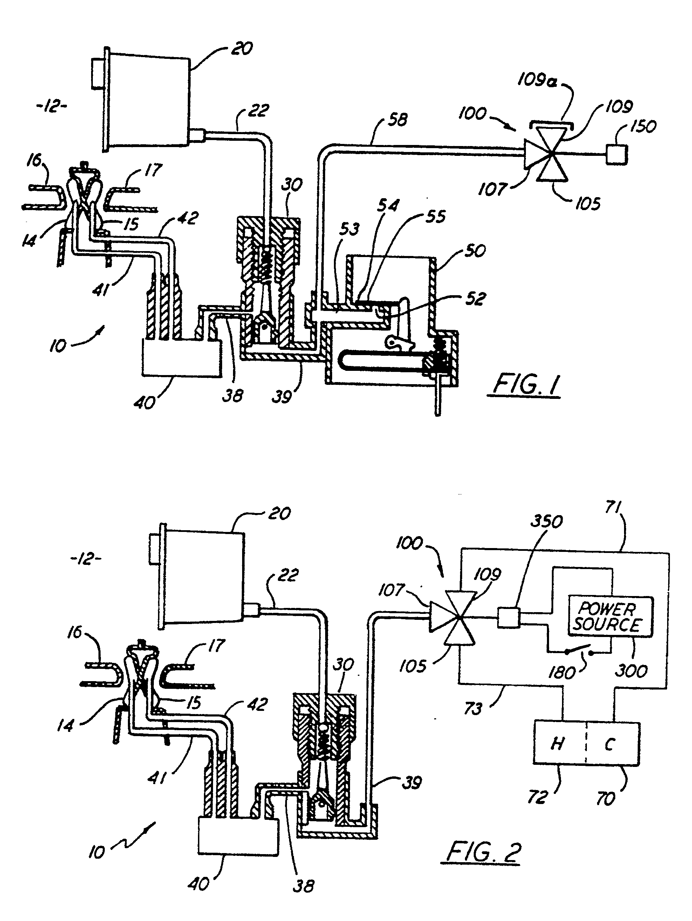

Figure 1 illustrates the use of the valve of the present invention in a warm-up configuration and is suitable for use with either actuator 150, 250 or 350 which will be described in more detail hereinafter. The numeral 10 generally designates an air distribution unit in which conditioned air is delivered from a central source thereof (not illustrated) to a plenum chamber 12 of the air distribution unit. A damper arrangement illustrated as inflatable bellows 14 and 15 regulates the flow of conditioned air from the plenum 12 to the area or space being conditioned. A portion of the conditioned air furnished to plenum chamber 12 flows through filter 20 where any foreign bodies entrained therein will be removed. The conditioned air passing through filter 20 is used for controlling the operation of unit 10. The control air passes from filter 20 to pressure regulator 30 via line 22. The control air passes from regulator 30 into distributor 40 via line 38 and from distributor 40 via lines 41 and 42 to bellows 14 and 15, respectively. Additionally, control air passes via line 39 to bleed-type thermostat 50 which senses the temperature of the area to be conditioned and in response thereto controls the magnitude of the control signal supplied to bellows 14 and 15 by bleeding control air through bleed port 52 and the aperture 55 of apertured sliding plate 54. The common or inlet port 107 of valve assembly 100 is connected upstream of bleed port 52 via line 58. Normally open outlet 109 is capped by a cap 109a so that line 58 is normally blocked and has no influence on thermostat 50. Assuming that thermostat 50 is set for cooling an area, the slide plate 54 and therefore the inflation of bellows 14 and 15 will be adjusted accordingly.

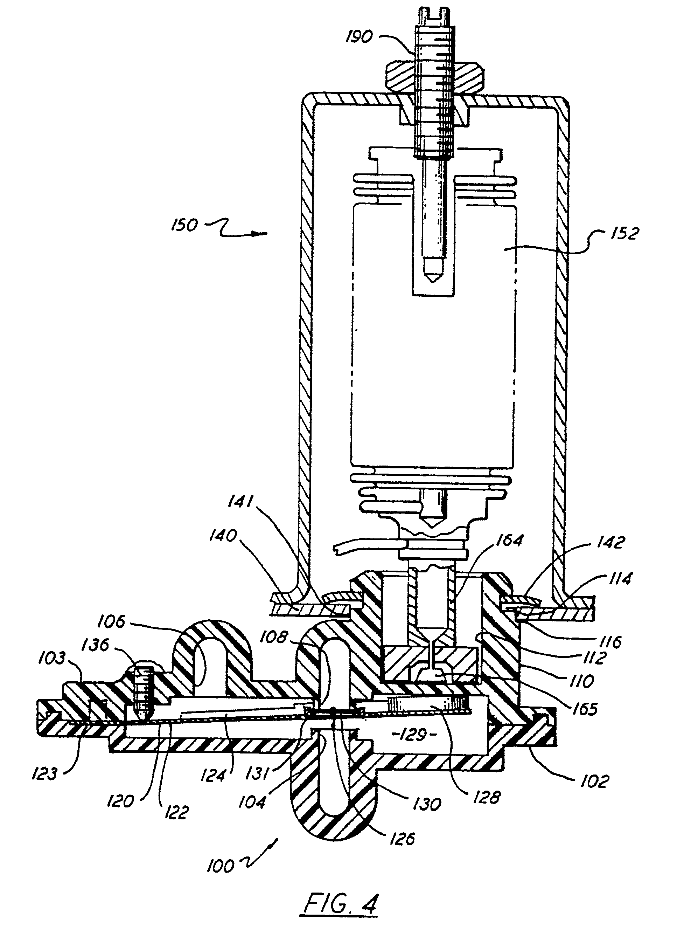

If, as described above, an overcooling situation exists in the area and it is desired to have an uncontrolled warm-up, the mere supplying of warm air would not cause flow of warm air into the area because the response of thermostat 50 to the overcooling is to inflate bellows 14 and 15 to block flow into the area. Actuator 150, as illustrated, actuator 250, or thermostatic switch 180 of actuator 350 is exposed to the warm air in the plenum or the flowing air stream which causes the actuation of actuator 150 (or actuator 250, or the deactuation of actuator 350) which causes the flexure of blade 122 to the Figure 4 position due to the magnetic attraction between magnetic member 165 and magnetic pad 128. In this position, port 104 is uncovered so that bellows 14 and 15 are connected to atmosphere via lines 41 and 42, distributor 40, line 38, line 39, line 58 and outlet 105 which effectively bypasses/disables thermostat 50 such that bellows 14 and 15 deflate and warm air is delivered to the area independent of thermostat 50.

Figure 2 illustrates the use of the valve of the present invention in a cooling/heating changeover configuration and is suitable for use with actuator 150, 250 or 350. The numeral 10 generally designates an air distribution unit as described with respect to Figure 1 in which conditioned air flows through filter 20 to pressure regulator 30 via line 22 and passes from regulator 30 into distributor 40 via line 38. The air passes from distributor 40 via lines 41 and 42 to bellows 14 and 15, respectively. Additionally, control air passes via line 39 to common or inlet port 107 of valve assembly 100. Normally open outlet 109 is connected to cooling thermostat 70 via line 71 and normally closed outlet 105 is connected to heating thermostat 72 via line 73. Thermostats 70 and 72 are oppositely acting bleed thermostats such as is illustrated in Figure 1 and designated 50. They are oppositely acting in that cooling thermostat 70 controls the lowering of the room temperature to the set point whereas heating thermostat 72 controls the raising of the room temperature to the set point.

The actuator 350, as illustrated, may have a switch 180 which may be of a thermostatic type and exposed to the plenum air or flowing air stream, or it may be a switch controlled by a computer or the like. The actuated and unactuated position of actuator 350 ere the reverse of those of actuators 150 and 250. In the actuated position of actuator 350, control air passes via line 39 to port 107, through valve assembly 100, out port 109 and passes via line 71 to cooling thermostat 70 which controls the inflation of bellows 14 and 15 as described above. If actuator 350 is unactuated, control air will pass via line 39 to port 107, through valve assembly 100, out port 105 and will pass via line 73 to heating thermostat 72 which controls the inflation of bellows 14 and 15 as described above. Actuator 150 or 250 would similarly respond to the plenum air or flowing air stream so as to connect ports 107 and 109 in response to cool air and ports 107 and 105 in response to hot air but the designation of the actuated and unactuated positions would be reversed. If desired, the ports 109 and 105 could be connected to thermostats 72 and 70, respectively, if the heating mode was desired to be the actuated mode of actuator 350 or the unactuated mode of actuator 150 or 250. Where switch 180 is computer controlled, in addition to providing a changeover between heating and cooling, ventilation can be minimized in the case of a fire by causing the system to go over to the heating mode which would reduce the supplying of fresh air to the fire. Additionally, where valve assembly 100 is connected as shown in Figure 1 and powered by actuator 350, an electric signal actuating actuator 350 will open port 105 to cause the bypassing of thermostat 50 and the deflating of bellows 14 and 15 providing maximum air circulation which is desired on the building floors above and below a fire. As noted, on the fire floor itself port 105 remains closed and the raised space temperature will cause the bellows 14 and 15 to inflate due to the stopping of bleed flow from thermostat 50 and thereby stop the flow of air to the space.

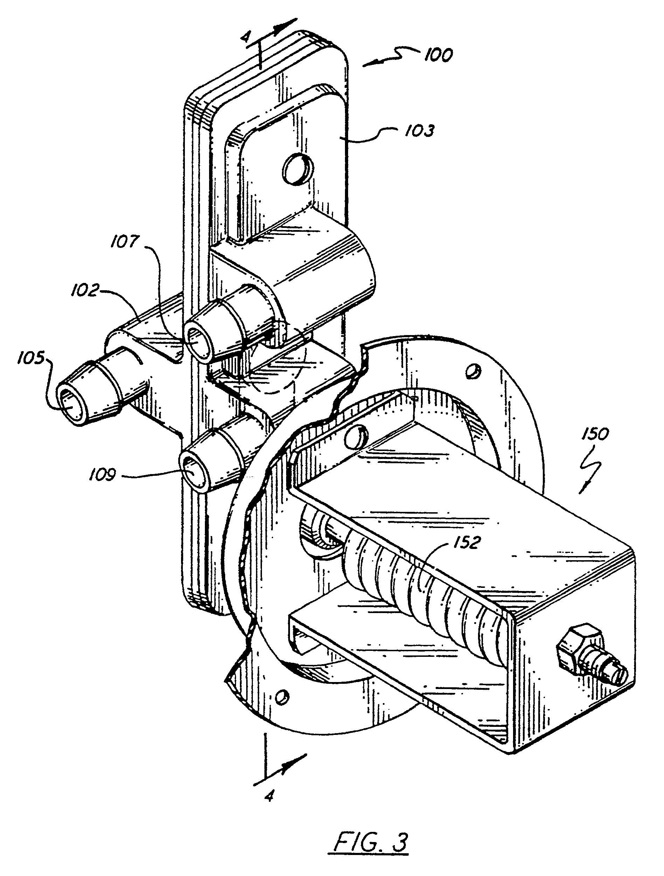

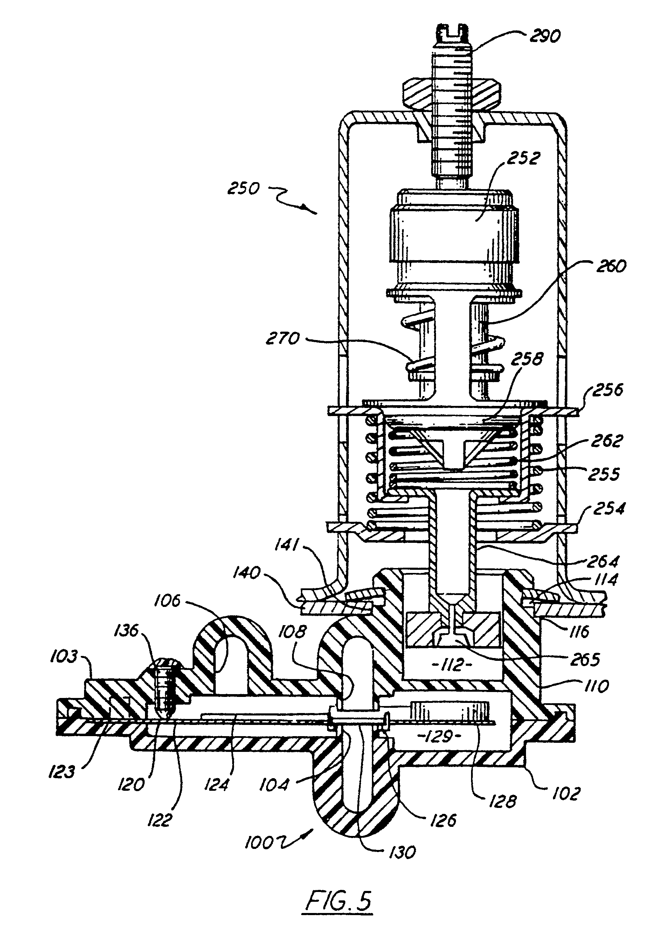

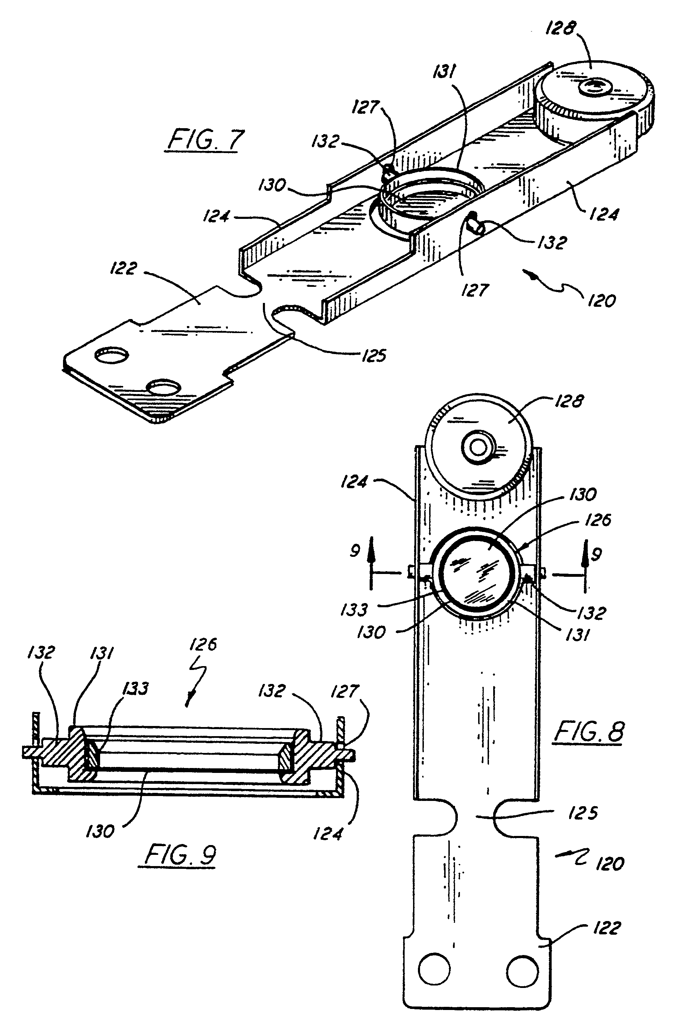

In Figures 3 and 4, the numeral 100 generally designates the valve assembly or proximity switch and the numeral 150 generally designates the actuator. The valve assembly 100 includes mating casing parts 102 and 103 which are of a non-magnetic material, such as plastic, and are glued or otherwise suitably secured together in a fluid tight assembly. Casing part 102 defines a normally closed port 104 which is fluidly connected to outlet 105. Casing part 103 defines port 106 and normally open port 108 which are, respectively, fluidly connected to inlet 107 and outlet 109. Casing part 103 further defines an extension 110 which has a cylindrical chamber 112 formed therein as well as an annular groove 114 and shoulder 116 formed on the exterior of the extension 110. A valve element 120 includes a flexible or pivotable blade 122 having one end received in a complementary recess 123 formed in casing part 102 so as to permit the locating and securing of valve element 120 in the assembling of casing parts 102 and 103. Blade 122 has a stiffener in the form of a stepped turned up flange 124 as well as yoke assembly 126 and low reluctance ferro magnetic pad 128 secured thereto. As is best shown in Figures 7 and 8, blade 122 also has a necked down portion 125 which defines the point of flexure of blade 122. Yoke assembly 126 includes a polyurethane film disc 130 which alternatively seats on port 104 or port 108 in a valving action. Because the yoke assembly 126 moves through an arc in moving between the positions blocking either port 104 or port 108, it is necessary to have the film disc 130 become co-planar with the seating face of ports 104 and 108. To achieve this, yoke 131 is provided with stepped diametrically extending pivot rods 132 as is best shown in Figures 8 and 9. Stepped pivot rods 132 are rotatably or pivotably received in mounting holes 127 in stepped turned up flange 124. Film disc 130 is held in place in yoke 131 by ring 133 which is press fit into yoke 131 with film disc 130 therebetween. Yoke 131 is therefore able to pivot into a co-planar engagement with port 104 or 108 and is moved to the co-planar engagement due to the unbalanced torsional force on the yoke 131 when film disc 130 is not co-planar and engages only one side thereof when engaging port 104 or 108. In installing yoke assembly 126, one or both of the stepped turned up flanges 124 is bent towards flat a sufficient amount to permit yoke assembly 126 to be snapped into mounting holes 127 and the flange(s) returned to their original shape. Screw 136 is threadably secured in casing part 103 and engages blade 122 so as to provide a seating bias to cause film disc 130 to close port 104 as illustrated in Figure 5 in an unactuated position of actuator 150 or 250. The necked down portion 125 of blade 122, as is best shown in Figures 7 and 8, defines the pivot for flexure of blade 122 since it provides the least resistance to flexure.

As best shown in Figure 4, the valve assembly or proximity switch 100 is secured in place by inserting extension 110 into hole 141 in sheet metal member 140 such that shoulder 116 engages sheet metal member 140. Typically, sheet metal member 140 is a member which may be installed in the wall of a plenum. A C-clip 142 or other suitable attachment means is placed in groove 114 and engages the opposite side of sheet metal member 140 as that engaged by shoulder 116.

With valve assembly 100 secured in place in member 140, an actuator can then be attached to member 140. Referring to Figure 4, actuator 150 includes a charged thermostatic bellows 152 which is preferably of copper and filled with gas. Magnetic actuator 164 is secured to bellows 152 and carries a magnetic member 165 which is reciprocated in chamber 112 by the expansion and contraction of bellows 152 due to changes in the temperature of the warm or cool air stream to which it is exposed. Magnetic member 165 acts as a proximity switch with respect to magnetic pad 128 in that magnetic member 165 is not exposed to the fluid within the chamber 129 but causes the movement of film disc 130 in a valving action by attracting magnetic pad 128 when in proximity thereto. In Figures 4 and 5 the structure of the valve assembly or proximity switch 100 is identical but Figure 4 illustrates the position of valve element 120 due to the magnetic attraction between magnetic member 165 and magnetic pad 128 whereas Figure 5 illustrates the unactuated position of valve element 120 due solely to the biasing effect of screw 136. The position of bellows 152 and therefore magnetic member 165 can be adjusted by screw 190.

In Figure 5, the valve assembly 100 is the same as that illustrated in Figures 3 and 4, but actuator 150 has been replaced with a different thermal actuator 250. The thermal actuator 250 is specifically illustrated as a phase change element 252 where a solid phase material goes to a liquid phase in the temperature range of interest and with an increase in volume, but could be a bimetal. In the unactuated position illustrated, compression spring 255 seats against stop 254 and cap member 256. Cap member 256 provides a seat for the head 258 of plunger 260 and is biased in opposition to spring 255 by spring 262 which seats against magnetic actuator 264 and head 258. Magnetic actuator 264 carries a magnetic member 265 which is reciprocated in chamber 112 by the actuator 250. The spring 262 serves as a lost motion device in that it absorbs overtravel of head 258 after magnetic actuator 264 has bottomed out in its movement within chamber 112. Spring 270 serves to return plunger 260 to the illustrated position when the output force is reduced in thermal element 252. The thermal element 252, located in the warm or cool air stream, senses the flowing air temperature and acts by changing phase, when appropriate. The position of thermal element 252 and therefore magnetic member 265 can be adjusted by screw 290.

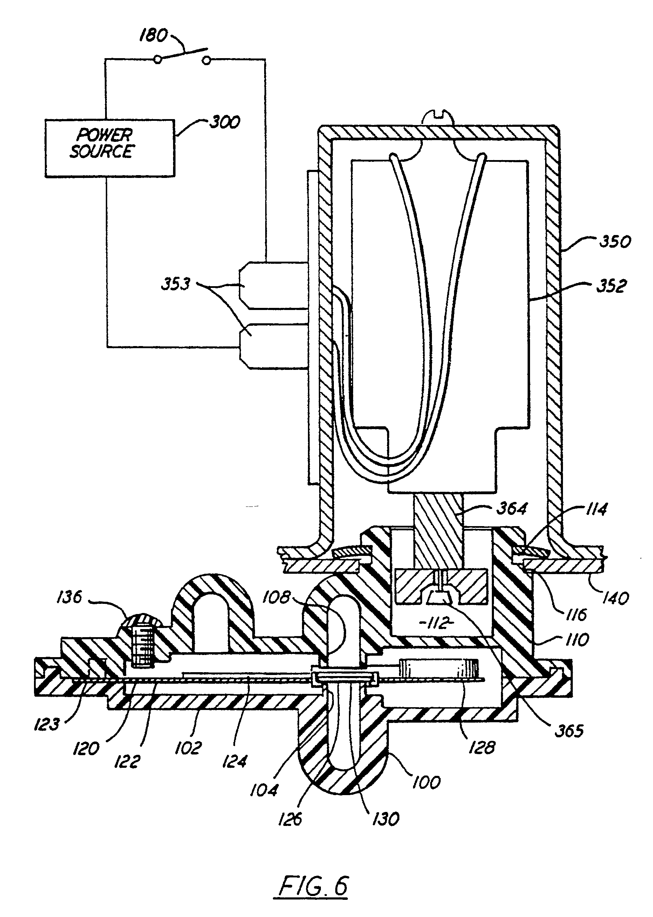

Referring now to Figure 6, the valve assembly or proximity switch 100 is the same as that of Figures 3-5 but actuator 350 includes an internal spring solenoid 352 for positioning valve element 120 in response to an electric signal. The magnetic actuator 364 which carries magnetic member 365 is attached to the shaft of the solenoid. Upon energizing of the solenoid 352, magnetic member 365 is moved outwardly in chamber 112 causing outlet port 104 to close, as illustrated. When the power is removed from the solenoid 352 the internal spring (not illustrated) causes the magnetic actuator 364 to move magnetic member 365 further into chamber 112 to thereby attract magnetic pad 128 causing valve disc 130 to engage and close port 108 and to open port 104. Power to solenoid 352 through contacts 353 is provided upon the closing of switch 180 which can be a thermostatically responsive switch or a computer controlled switch. The power source 300 can be any suitable source of power and may be incorporated into a computer control.

As noted, the valve assembly 100 is identical in Figures 3-6 Figures 5 and 6 show valve element 120 in the same position closing port 104. However, Figure 5 is a cold or an unactuated position of actuator 250 and Figure 6 is an actuated position of actuator 350. The difference in designation is due to the fact that energy in the form of heat is necessary to expand/atuate the actuators 150 and 250 whereas electrical energy is necessary to contact/actuate actuator 350. Figure 4 shows the valve element 120 in its actuated position closing port 108. In the case of actuator 350, the solenoid 352 is actuated in response to the completing of an electric circuit by the closing of a switch 180 which may be caused by a computer or the like or may be a thermally actuated switch exposed to the conditioned air which completes the power supply circuit upon closing. Actuators 150 an 250, however, are responsive to the temperature of their surroundings and would normally be exposed to the plenum air or the moving air stream.

## Claims

1. Valve, especially for use in a conditioned air distribution system to achieve a warm-up or changeover function, said valve comprising:

housing means (102,103) defining a chamber (129) and having a plurality of fluid port means (104,106,108) in fluid communication with said chamber (129);

valve element means (120) including magnetic means (128) and being pivotably mounted in said chamber (129) so as to be movable between a first position blocking one of said port means and a second position blocking another of said port means; and

actuator means (150;250;350) including a magnetic member (165;265;365) and means (152;252;352) for moving said magnetic member (165;265;365) relative to said magnetic means (128) whereby said valve element means (120) is caused to move between said first and second positions due to magnetic force between said magnetic means (128) and said magnetic member (165;265;365),

characterized by:

said plurality of fluid port means comprising an inlet port (106) and a first and a second outlet port (104,108);

said valve element means (120) including a flexible blade (122) and said outlet ports (104,108) being located on opposite sides of said blade (122), said blade (122) having one end portion fixed to said housing means (102,103) and another end portion carrying said magnetic means (128) and a single port closure disc (130) adapted to block said first outlet port (104) in said first position of said valve element means (120) and said second outlet port (108) in said second position of said valve element means (120);

biasing means (136) for normally positioning said valve element means (120) in said first position; and

said actuator means (150;250;350) being adapted to move the magnetic member (165;265;365) into and out of proximity with said magnetic means (128) whereby said valve element means (120) is caused to move to said second position due to magnetic attraction between said magnetic means (120) and said magnetic member (165;265;365) when in proximity and returns to said first position when out of proximity.

2. Valve according to claim 1, characterized in that said means for moving includes thermostatically responsive means (152;252;180).

3. Valve according to claim 1, characterized in that said means for moving includes a solenoid (352).

4. Valve according to claim 3, characterized in that said means for moving includes a thermostatically responsive switch (180).

5. Valve according to claim 1, characterized in that said valve element blade (122) further includes pivot defining means (125) for locating the flexure point of said valve element blade (122).

6. Valve according to claim 1, characterized in that said port closure disc (130) is pivotably mounted on said blade (122) so as to be co-planar with said first and second outlet ports (104,108) when seated thereon.

## Patentansprüche

1. Ventil, insbesondere zur Verwendung in einem Verteilsystem für konditionierte Luft, zum Erfüllen einer Aufwärmoder Umschaltfunktion, wobei das Ventil umfaßt:

eine Gehäuseeinrichtung (102, 103), die eine Kammer (129) enthält und mehrere Fluidöffnungseinrichtungen (104, 106, 108) in Strömungsverbindung mit der Kammer (129) hat;

eine Verschlußstückeinrichtung (120), die eine magnetische Einrichtung (128) aufweist und in der Kammer (129) schwenkbar befestigt ist, so daß sie zwischen einer ersten Position, in der sie eine der Öffnungseinrichtungen blockiert, und einer zweiten Position bewegbar ist, in der sie eine andere Öffnungseinrichtung blockiert; und

eine Stellantriebseinrichtung (150; 250; 350) mit einem magnetischen Teil (165; 265; 365) und einer Einrichtung (152; 252; 352) zum Bewegen des magnetischen Teils (165; 265; 365) relativ zu der magnetischen Einrichtung (128), wodurch die Verschlußstückeinrichtung (120) veranlaßt wird, sich zwischen der ersten und zweiten Position aufgrund der magnetischen Kraft zwischen der magnetischen Einrichtung (128) und dem magnetischen Teil (165; 265; 365) zu bewegen, gekennzeichnet durch:

die Fluidöffnungseinrichtungen umfassen eine Einlaßöffnung (106) sowie eine erste und eine zweite Auslaßöffnung (104, 108),

die Verschlußstückeinrichtung (120) weist ein flexibles Blatt (122) auf, und die Auslaßöffnungen (104, 108) sind auf entgegengesetzten Seiten des Blattes (122) angeordnet, das Blatt (122) hat einen Endteil, der an der Gehäuseeinrichtung (102, 103) befestigt ist, und einen weiteren Endteil, der die magnetische Einrichtung (128) und eine einzelne Öffnungsverschlußscheibe (130) trägt, mittels welcher die erste Auslaßöffnung (104) in der ersten Position der Verschlußstückeinrichtung (120) und die zweite Auslaßöffnung (108) in der zweiten Position der Verschlußstückeinrichtung (120) blockierbar ist;

eine Vorspanneinrichtung (136), um die Verschlußstückeinrichtung (120) normalerweise in der ersten Position zu positionieren; und

die Stellantriebseinrichtung (150; 250; 350) ist in der Lage, das magnetische Teil (165; 265; 365) in die und aus der Nähe der magnetischen Einrichtung (128) zu bewegen, wodurch die Verschlußstückeinrichtung (120) veranlaßt wird, sich in die zweite Position aufgrund der magnetischen Anziehung zwischen der magnetischen Einrichtung (120) und dem magnetischen Teil (165; 265; 365) zu bewegen, wenn es in der Nähe ist, und in die erste Position zurückzukehren, wenn es nicht in der Nähe ist.

2. Ventil nach Anspruch 1, dadurch gekennzeichnet, daß die Einrichtung zum Bewegen eine Thermostateinrichtung (152; 252; 180) aufweist.

3. Ventil nach Anspruch 1, dadurch gekennzeichnet, daß die Einrichtung zum Bewegen einen Elektromagnet (352) aufweist.

4. Ventil nach Anspruch 3, dadurch gekennzeichnet, daß die Einrichtung zum Bewegen einen Thermostatschalter (180) aufweist.

5. Ventil nach Anspruch 1, dadurch gekennzeichnet, daß das Verschlußstückblatt (122) weiter eine einen Drehpunkt bildende Einrichtung (125) zum Festlegen der Lage des Biegepunktes des Verschlußstückblattes (122) aufweist.

6. Ventil nach Anspruch 1, dadurch gekennzeichnet, daß die Öffnungsverschlußscheibe (130) an dem Blatt (122) schwenkbar befestigt ist, so daß sie mit der ersten und zweiten Auslaßöffnung (104, 108) koplanar ist, wenn sie darauf sitzt.

**Revendications**

1. Vanne, plus particulièrement destinée à être utilisée dans un système de distribution d'air conditionné pour assurer une fonction de chauffage ou d'inversion, ladite vanne comprenant:

des moyens de carter (102, 103) définissant une chambre (129) et ayant une pluralité de moyens d'orifice (104, 106, 108) de passage de fluides en communication hydraulique avec ladite chambre (129);

des moyens d'élément de vanne (120) comportant des moyens magnétiques (128) et montés pivotants dans ladite chambre (129) de manière à se déplacer entre une première position obstruant un desdits moyens d'orifice de passage et une seconde position obstruant un autre desdits moyens d'orifice de passage; et

des moyens de dispositif de commande (150, 250, 350) comportant un élément magnétique (165, 265, 365) et des moyens (152, 252, 352) pour déplacer ledit élément magnétique (165, 265, 365) par rapport auxdits moyens magnétiques (128), lesdits moyens d'élément de vanne (120) étant amenés à se déplacer entre lesdites première et seconde positions par suite de la force magnétique existant entre lesdits moyens magnétiques (128) et ledit élément magnétique (165, 265, 365)

*caractérisée en ce que* ladite pluralité de moyens d'orifice de passage de fluides comprend un orifice d'entrée (106) et un premier et un second orifices de sortie (104, 108);

lesdits moyens d'élément de vanne (120) comprennent une pale flexible (122) et lesdits orifices de sortie (104, 108) sont situés sur des côtés opposés de ladite pale (122), ladite pale (122) ayant une partie terminale fixée auxdits moyens de carter (102, 103) et une autre partie terminale recevant lesdits moyens magnétiques (128) et un unique disque (130) de fermeture des orifices adapté pour obturer ledit premier orifice de sortie (104) dans ladite première position desdits moyens d'élément de vanne (120) et ledit second orifice de sortie (108) dans ladite seconde position desdits moyens d'élément de vanne (120);

des moyens de déport (136) pour positionner normalement lesdits moyens d'élément de vanne (120) dans ladite première position;

*et en ce que* lesdits moyens de dispositif de commande (150, 250, 350) sont conçus pour amener l'élément magnétique (165, 265, 365) à proximité ou hors de proximité desdits moyens magnétiques (128), ce qui fait que lesdits moyens d'élément de vanne (120) sont amenés à se déplacer vers ladite seconde position par suite de la force magnétique existant entre lesdits moyens magnétiques (128) et ledit élément magnétique (165, 265, 365) lorsqu'il est à proximité et à retourner à ladite première position lorsqu'il est hors de proximité.

2. Vanne selon la revendication 1, *caractérisée en ce que* lesdits moyens pour déplacer comprennent des moyens thermostatiques (152, 252, 180).

3. Vanne selon la revendication 1, *caractérisée en ce que* lesdits moyens pour déplacer comprennent un aimant plongeur (352).

4. Vanne selon la revendication 3, *caractérisée en ce que* lesdits moyens pour déplacer comprennent un interrupteur thermostatique (180).

5. Vanne selon la revendication 1, *caractérisée en ce que* ladite lame (122) de l'élément de vanne comprend additionnellement des moyen (125) définissant un pivot pour déterminer la position du point de flexion de ladite lame (122) de l'élément de vanne.

6. Vanne selon la revendication 1, *caractérisée en ce que* lesdit disque (130) de fermeture des orifices est monté pivotant sur ladite lame (122) de manière à être coplanaire avec lesdits premier et second orifices (104, 108) de sortie lorsqu'il s'appuie sur ceux-ci.

EP 0 229 742 B1

FIG. 1

FIG. 2

8

*FIG. 3*

*FIG. 4*

FIG.5

FIG. 6

_FIG. 7_

128

131

127

132

130

124

124

122

132

127

120

125

128

124

130

126

9

9

133

132

130

131

_FIG. 8_

132    131

133

126

132    127

130

124

_FIG. 9_

125

120

122